# EUROPEAN PATENT APPLICATION

(11) **EP 4 600 317 A1**
(43) Date of publication of application: **13.08.2025**
(21) Application number: 24221335.3
(22) Date of filing: 19.12.2024
(51) Int. Cl.: C09D 11/101, C09D 11/50, C09D 11/326, C09D 11/322, C09D 11/107

(54) **INKJET INK, METHODS FOR PRODUCING PIGMENT DISPERSION AND INKJET INK, METHOD FOR FORMING CURED PRODUCT, AND CURED PRODUCT**

(30) Priority: 09.02.2024 JP 2024018560
(71) Applicant: KONICA MINOLTA, INC., Tokyo 100-7015 (JP)
(72) Inventor: Iguchi, Kazuki, Tokyo, 100-7015 (JP); Mori, Hisashi, Tokyo, 100-7015 (JP); Miyano, Masashi, Tokyo, 100-7015 (JP)
(74) Representative: Gille Hrabal Partnerschaftsgesellschaft mbB Patentanwälte

(57) **Abstract**

The inkjet ink contains a polymerizable compound, a phosphorescent pigment, and a dispersant having an acidic functional group, and is cured by irradiation with active rays.

## Description

### BACKGROUND OF THE INVENTION

### 1. Field of the Invention

The present invention relates to an inkjet ink, methods for producing a pigment dispersion and an inkjet ink, a method for forming a cured product, and a cured product.

### 2. Description of Related Art

A phosphorescent pigment is known which absorb light of a predetermined wavelength, accumulates the energy of the light, and emits light with a wavelength different from that of the absorbed light for a long time even after the absorption of light is stopped (for example, Japanese Unexamined Patent Publication No. 2019-210337). A method is also known in which an inkjet head containing the phosphorescent pigment is applied to a base material to produce a phosphorescent cured product (e.g., Japanese Unexamined Patent Publication No. 2014-28484).

When an inkjet ink containing a phosphorescent pigment is used, it is expected that a cured product patterned with high definition can be produced. A phosphorescent cured product is required to have a large thickness in order to sufficiently increase the luminance. However, according to the findings of the present inventors, the luminance of the phosphorescent cured product is saturated and does not increase any more when the film thickness reaches a certain level. Therefore, development of a method for improving the luminance of a phosphorescent cured product is required.

In addition, an ink containing a phosphorescent pigment is prone to clogging nozzles with the phosphorescent pigment when ejected from an inkjet head, which can easily result in defective nozzles.

### SUMMARY OF THE INVENTION

The present invention relates to an inkjet ink containing a phosphorescent pigment. The present invention provides an inkjet ink that can produce a cured product having sufficiently high luminance and is less likely to cause defective nozzles. Another object of the present invention is to provide a method for producing a pigment dispersion and a method for producing the inkjet ink. Still another object of the present invention is to provide a method for forming a cured product using the inkjet ink, and a cured product formed by the method.

In order to realize at least one of the abovementioned objects, an inkjet ink reflecting one aspect of the present invention contains a polymerizable compound, a phosphorescent pigment, and a dispersant having an acidic functional group, and is cured by irradiation with active rays.

The advantageous and features provided by one or more embodiments of the invention will become more fully understood from the detailed description given hereinbelow which is given by way of illustration only, and thus are not intended as a definition of the limits of the present invention.

### DESCRIPTION OF THE PREFERRED EMBODIMENTS

Hereinafter, one or more embodiments of the present invention will be described. However, the scope of the invention is not limited to the disclosed embodiments.

### 1. Inkjet Ink

One embodiment of the present invention provides an inkjet ink (hereinafter, also referred to simply as "ink") containing a polymerizable compound, a phosphorescent pigment, and a dispersant. The ink is an active ray-curable ink that is cured by irradiation with active rays. Hereinafter, each component will be described.

### 1-1. Phosphorescent Pigment

The phosphorescent pigment absorbs light having a predetermined wavelength and accumulates light energy. Then, even after the absorption of light is stopped, the accumulated energy of light is emitted for a long time as light having a wavelength different from that of the absorbed light. That is, the phosphorescent pigment is a pigment which emits phosphorescence. The ink may contain only one type of phosphorescent pigment or may contain two or more types of phosphorescent pigments.

The phosphorescent pigment is not particularly limited as long as it has the above-described characteristics. Examples of the phosphorescent pigment include those obtained by subjecting a base crystal which is a metal compound to an activation treatment.

Examples of the base crystal include metal sulfides such as zinc sulfide, calcium sulfide, germanium sulfide, strontium sulfide, and yttrium sulfide. Examples of the base crystal further include metal oxides such as calcium oxide, strontium oxide, barium oxide, alumina, and cerium oxide. Examples of the base crystal also include aluminates such as calcium aluminate, strontium aluminate, and barium aluminate.

Examples of the activator for activating the base crystal include europium, terbium, yttrium, zirconium, dysprosium, and barium. Of these, europium and dysprosium are preferred.

Among these, from the viewpoint of enhancing dispersibility by an acidic dispersant described later, the phosphorescent pigment is preferably a phosphor containing an aluminate. Furthermore, from the viewpoint of enhancing dispersibility by an acidic dispersant described later, the phosphorescent pigment is preferably a phosphor containing calcium aluminate, strontium aluminate, or barium aluminate. Furthermore, from the viewpoint of enhancing the dispersibility by an acidic dispersant described later, the phosphorescent pigment is preferably SrAl₂O₄ or Sr₄Al₁₄O₂₅ containing europium (Eu) and dysprosium (Dy) as activators.

The peak wavelength of the excitation spectrum of the phosphorescent pigment is preferably 300 nm or more and 400 nm or less. When the peak wavelength of the excitation spectrum of the phosphorescent pigment is in the above range, the phosphorescent pigment can be sufficiently excited by sunlight, and the cured product is easily adapted to outdoor use.

The peak wavelength of the emission spectrum of the phosphorescent pigment may be, for example, 400 nm or more and 700 nm or less, and are preferably 450 nm or more and 600 nm or less, from the viewpoint of further enhancing the visibility of the cured product.

The median diameter of the phosphorescent pigment in the ink is not particularly limited and may be 0.2 µm or more and 20.0 µm or less. The median diameter of the phosphorescent pigment is preferably 1.0 µm or more and 10.0 µm or less, more preferably 1.0 µm or more and 5.0 µm or less, further more preferably 1.5 µm or more and 3 µm or less. The greater the median diameter, the easier it is to increase the luminance of the cured product. The smaller the median diameter, the easier it is for the phosphorescent pigment to disperse, improving ejectability from an inkjet head.

The particle diameter (Dso) at which the cumulative value in the volume-based particle size distribution is 50% may be used as the median diameter of the phosphorescent pigment.

The particle diameter (D₉₀) at which the cumulative value in the volume-based particle size distribution of the phosphorescent pigment in the ink is 90% may be 1.0 µm or more and 20 µm or less, preferably 1.5 µm or more and 10 µm or less, more preferably 2.0 µm or more and 8 µm or less. The smaller the D₉₀, the easier it is for the phosphorescent pigment to disperse, and the easier it is for the ink to be ejected from an inkjet head.

The phosphorescent pigments preferably have a D₅₀/D₉₀ of 0.2 or more and 0.8 or less, more preferably 0.3 or more and 0.6 or less. The smaller the D₅₀/D₉₀, the broader the particle size distribution, making it possible to form a cured product in which the phosphorescent pigment is densely packed, and thus improving the weather resistance of the cured product.

The D₅₀ and the D₉₀ of a phosphorescent pigment may be values measured using a particle diameter measuring apparatus, for example, LUMiSizer manufactured by LUM Japan Co., Ltd.

The content of the phosphorescent pigment may be set according to the use of the phosphorescent pigment. For example, the content of the phosphorescent pigments may be 5% by mass or more and 70% by mass or less based on the total weight of the ink, is preferably 5% by mass or more and 40% by mass or less, and is more preferably 10% by mass or more and 30% by mass or less. As the content of the phosphorescent pigment increases, the luminance of the cured product increases. The smaller the content of the phosphorescent pigments, the higher the ejectability of the ink.

### 1-2. Dispersant

The dispersant is a dispersant for dispersing the phosphorescent pigment. The ink may contain only one type of dispersant or may contain two or more types of dispersants. The dispersant may be a polymer dispersant or a low molecular weight dispersant, but is preferably a polymer dispersant.

The dispersant includes an acidic dispersant having an acidic functional group as a functional group that adsorbs to the phosphorescent pigment. The ink may contain only one type of acidic dispersant or may contain two or more types of acidic dispersants. The acidic dispersant may be a polymer dispersant or a low molecular weight dispersant, but is preferably a polymer dispersant.

An active ray-curable ink that is cured by irradiation with active rays can form a cured product having high toughness, and therefore, a cured product having high durability can be produced. In addition, the phosphorescent pigment is more likely to be degraded by water. Therefore, in the active ray-curable ink that does not require water, the phosphorescent pigment is less likely to deteriorate during storage and the luminance of the cured product is less likely to decrease even when stored for a long period of time, as compared with the aqueous ink.

On the other hand, a cured product formed by curing of the active ray-curable ink serves as both the light emitting layer holding the phosphorescent pigment and the light shielding layer. That is, the particles of the phosphorescent pigment in the cured product may shield light emitted from other phosphorescent pigments. As the thickness of the cured product increases, the possibility that light emitted from a certain phosphorescent pigment is blocked by another phosphorescent pigment until the light is emitted to the outside of the cured product increases. Thus, it is considered that when the film thickness of the cured product is increased to some extent, the luminance is saturated, and the luminance is less likely to increase even when the film thickness is increased.

The phosphorescent pigment is formed of a compound having basicity, such as metal sulfide, metal oxide, and aluminate. Therefore, in the present embodiment, an acidic dispersant is used as the dispersant for dispersing the phosphorescent pigment. An acidic dispersant has good adsorptivity to a phosphorescent pigment, and therefore is considered to increase the dispersibility of the phosphorescent pigment. It is considered that, as a result of the enhanced dispersibility of the phosphorescent pigment, the phosphorescent pigment is also dispersed sparsely in the cured product, and light is less likely to be blocked by other phosphorescent pigment. In addition, it is considered that since the dispersibility of the phosphorescent pigment is enhanced, the phosphorescent pigment is less likely to clog a nozzle of an inkjet head and the ink ejectability is also improved. In addition, it is considered that since the dispersibility of the phosphorescent pigment is increased, the precipitation of the phosphorescent pigment in the ink is less likely to occur, and the fluidity and the circulation properties of the ink in the inkjet head are also improved.

The acidic dispersant preferably has an acid value of 30 mgKOH/g or more and 300 mgKOH/g or less from the viewpoint of enhancing the dispersibility of the phosphorescent pigment to more effectively enhance the luminance of the cured product, the ejectability of the ink, and the like. Furthermore, the acid value of the acidic dispersant is more preferably 30 mgKOH/g or more and 200 mgKOH/g or less, and still more preferably 50mgKOH/g or more and 150mgKOH/g or less.

The acid value of the acidic dispersant can be measured using an automatic titrator (COM 555, manufactured by Hiranuma Sangyo Co., Ltd). To 0.5 to 1 g of a sample solution, acetone 80 mL and aqueous 10 mL are added, and the mixture is stirred to dissolve uniformly. The sample solution is titrated with 0.1 mol/L KOH aqueous solution to measure the acid value (mgKOH/g) of the sample solution. Next, the acid value per solid content of the sample is calculated from the acid value of the sample solution and the solid content concentration of the sample solution.

The acidic functional group of the acidic dispersant is not particularly limited. Examples of the acidic functional group include a phosphate group, a carboxyl group, and a sulfonic acid group. Among these, a phosphoric acid group and a carboxyl group are preferable, and a carboxyl group is more preferable, from the viewpoint of increasing the dispersibility of the phosphorescent pigment to more effectively increase the luminance of the cured product, the ejectability of the ink, and the like.

The type of the functional group contained in the acidic dispersant can be measured by a conventional method.

Examples of the acidic dispersant include Marialim SC0505K, SC1015F, and AKM-0531, manufactured by NOF Corp. ("Marialim" is a registered trade mark of the company). Other examples of the acidic dispersant include Efka FA4620 manufactured by Basf SE ("Efka" is a registered trade mark of the company). Other examples of acidic dispersants include Solsperse S41000 and S79000, manufactured by Lubrizol Corporation ("Solsperse" is a registered trade mark of the same company).

The content of the acidic dispersant is preferably from 0.01% by mass to 20% by mass, more preferably from 1% by mass to 10% by mass, and even more preferably from 1% by mass to 5% by mass, based on the total weight of the phosphorescent pigments.

### 1-3. Polymerizable Compound and Photopolymerization Initiator

### 1-3-1. Polymerizable Compound

The polymerizable compound may be a radically polymerizable compound or a cationically polymerizable compound. A combination of a radically polymerizable compound and a cationically polymerizable compound may be used as the polymerizable compound.

The radically polymerizable compound is a compound (a monomer, an oligomer, a polymer, or a mixture thereof) having an ethylenically unsaturated bond capable of radical polymerization.

Examples of the compound having an ethylenically unsaturated bond capable of radical polymerization include unsaturated carboxylic acid and salts thereof, unsaturated carboxylic acid ester compounds, unsaturated carboxylic acid urethane compounds, and unsaturated carboxylic acid amide compounds and an anhydride thereof, acrylonitrile, styrene, unsaturated polyester, unsaturated polyether, unsaturated polyamide, and unsaturated urethane. Examples of the unsaturated carboxylic acid include (meth) acrylic acid, itaconic acid, crotonic acid, isocrotonic acid, and maleic acid.

Among these, the radically polymerizable compound is preferably an unsaturated carboxylic acid ester compound; and more preferably a (meth) acrylate. The (meth) acrylate may be not only a monomer described below, but also an oligomer, a mixture of a monomer and an oligomer, a modified product, an oligomer having a polymerizable functional group, or the like.

Examples of the monofunctional (meth)acrylate include isoamyl (meth)acrylate, stearyl (meth)acrylate, isobornyl (meth)acrylate, lauryl (meth)acrylate, octyl (meth)acrylate, decyl (meth)acrylate, isomyristyl (meth)acrylate, isostearyl (meth)acrylate, 2-phenoxyethyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, o-phenylphenoxyethyl (meth)acrylate, m-phenoxybenzyl (meth)acrylate, cyclic trimethylolpropane formal (meth)acrylate, ethoxylated phenoxy (meth)acrylate, alkoxylated phenol (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-hydroxy-o-phenylphenolpropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid and t-butylcyclohexyl (meth)acrylate.

Examples of the polyfunctional (meth) acrylate include the following: difunctional (meth)acrylates including triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecanedimethanol diacrylate, dimethylol-tricyclodecane di(meth)acrylate, bisphenol A-type di(meth)acrylate, hydroxypivalic neopentyl glycol di(meth)acrylate, bisphenol fluorene diacrylate (A-BPEF), bisphenol A-type 10EO modified diacrylate, bisphenol A-type diacrylate, bisphenol A-type PO modified diacrylate, bisphenol A-type EO modified diacrylate, polytetramethylene glycol di(meth)acrylate, polyethylene glycol diacrylate, dipropylene glycol diacrylate, and tripropylene glycol diacrylate; and trifunctional or higher (meth)acrylates including trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerolpropoxy tri(meth)acrylate, and pentaerythritol ethoxy tetra(meth)acrylate, and the like.

The (meth)acrylate may be a modified product. Examples of the modified (meth)acrylates include ethylene oxide-modified (meth)acrylates such as ethylene oxide-modified trimethylolpropane tri(meth)acrylate and ethylene oxide-modified pentaerythritol tetraacrylate, caprolactone-modified (meth)acrylates such as caprolactone-modified trimethylolpropane tri(meth)acrylate, and caprolactam-modified (meth)acrylates such as caprolactam-modified dipentaerythritol hexa(meth)acrylate.

The (meth)acrylate may be a polymerizable oligomer. Examples of the (meth)acrylate that is a polymerizable oligomer include an epoxy (meth)acrylate oligomer, an aliphatic urethane (meth)acrylate oligomer, an aromatic urethane (meth)acrylate oligomer, a polyester (meth)acrylate oligomer, and a linear (meth)acryl oligomer.

Examples of the cationically polymerizable compound include epoxy compounds, vinyl ether compounds, and oxetane compounds.

Examples of the epoxy compounds include the following: cycloaliphatic epoxy resins such as 3,4-epoxycyclohexylmethyl-3',4'-epoxycyclohexanecarboxylate, bis(3,4-epoxycyclohexylmethyl)adipate, vinylcyclohexene monoepoxide, ε-caprolactone-modified 3,4-epoxycyclohexylmethyl 3',4'-epoxycyclohexanecarboxylate, 1-methyl-4-(2-methyloxiranyl)-7-oxabicyclo [4,1,0]heptane, 2-(3,4-epoxycyclohexyl-5,5-spiro-3,4-epoxy)cyclohexanone-meta-dioxane, and bis(2,3-epoxycyclopentyl)ether; aliphatic epoxy compounds including diglycidyl ether of 1,4-butanediol, diglycidyl ether of 1,6-hexanediol, triglycidyl ether of glycerin, triglycidyl ether of trimethylolpropane, diglycidyl ether of polyethylene glycol, diglycidyl ether of propylene glycol, polyglycidyl ethers of polyether polyols obtained by adding one or more alkylene oxides (such as ethylene oxide and propylene oxide) to aliphatic polyhydric alcohols such as ethylene glycol, propylene glycol, and glycerin; and aromatic epoxy compounds including di- or polyglycidyl ethers of bisphenol A or its alkylene oxide adducts, di- or polyglycidyl ethers of hydrogenated bisphenol A or its alkylene oxide adducts, and novolac type epoxy resins.

Examples of the vinyl ether compound include the following: monovinyl ether compounds including ethyl vinyl ether, N-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, N-propyl vinyl ether, isopropyl vinyl ether, isopropenyl ether-o-propylene carbonate, dodecyl vinyl ether, diethylene glycol monovinyl ether, octadecyl vinyl ether, and the like; and di-or trivinyl ether compounds including ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and the like.

Examples of the oxetane compound include 3-hydroxymethyl-3-methyloxetane, 3-hydroxymethyl-3-ethyloxetane, 3-hydroxymethyl-3-propyloxetane, 3-hydroxymethyl-3-n-butyloxetane, 3-hydroxymethyl-3-phenyloxetane, 3-hydroxymethyl-3-benzyloxetane, 3-hydroxyethyl-3-methyloxetane, 3-hydroxyethyl-3-ethyloxetane, 3-hydroxyethyl-3-propyloxetane, 3-hydroxyethyl-3-phenyloxetane, 3-hydroxypropyl-3-methyloxetane, 3-hydroxypropyl-3-ethyloxetane, 3-hydroxypropyl-3-propyloxetane, 3-hydroxypropyl-3-phenyloxetane, 3-hydroxybutyl-3-methyloxetane, 1,4-bis{[(3-ethyl-3-oxetanyl)methoxy]methyl}benzene, 3-ethyl-3-(2-ethylhexyloxymethyl)oxetane and di[1-ethyl(3-oxetanyl)]methyl ether.

The polymerizable compound preferably includes a monofunctional compound having an aromatic ring in the molecule thereof. The polymerizable compound having an aromatic ring in the molecule thereof can enhance the storage stability of the ink and reduce the likelihood of nozzle clogging. In addition, the polymerizable compound having an aromatic ring in the molecule thereof can increase the dispersibility of the phosphorescent pigment in the ink and increase the luminance of the cured product. In addition, the monofunctional compound is less likely to increase the viscosity of the ink.

The content of the monofunctional polymerizable compound having an aromatic ring is preferably 20% by mass or more and 80% by mass or less, more preferably 25% by mass or more and 60% by mass or less based on the total mass of the ink.

Examples of the monofunctional polymerizable compound having an aromatic ring include phenol 4EO modified acrylate, 2-phenoxyethyl acrylate, m-phenoxybenzyl acrylate, EO modified o-phenylphenol acrylate, benzyl acrylate, cumyl phenoxyethyl acrylate, 2-hydroxy-3-phenoxypropyl acrylate, and 2-hydroxy-o-phenylphenol propyl acrylate.

The content of the polymerizable compound is preferably 50% by mass or more and 97% by mass or less, more preferably 60% by mass or more and 95% by mass or less based on the total mass of the polymerizable compound.

### 1-3-2. Photopolymerization Initiator

The photopolymerization initiator can be a radical initiator when the polymerizable ink contains a radical polymerizable compound, and can be a cationic initiator (photoacid generator) when the polymerizable ink contains a cationic polymerizable compound. When polymerization is initiated by irradiation with an electron beam, the polymerizable ink does not have to contain a photopolymerization initiator.

Examples of the radical polymerization initiator include hydrogen abstraction type photopolymerization initiators and intramolecular cleavage type photopolymerization initiators. Examples of the hydrogen abstraction type photopolymerization initiators includes intramolecular hydrogen abstraction type photopolymerization initiators, intermolecular hydrogen abstraction type photopolymerization initiators, and the like.

An intramolecular hydrogen abstraction type photopolymerization initiator is a photopolymerization initiator excited by irradiation with active energy rays and causes an intramolecular hydrogen abstraction reaction to generate radicals. Examples of the intramolecular hydrogen abstraction type photopolymerization initiator include methyl benzoylformate-based photopolymerization initiators such as methyl phenylglyoxylate, and oxyphenyl-based photopolymerization initiators such as a mixture of oxyphenylacetic acid-2-[2-oxo-2-phenylacetoxy-ethoxy]ethyl ester and oxyphenylacetic acid 2-[2-hydroxy-ethoxy]ethyl ester. Of these, a compound having a glyoxylic acid structure, such as a methyl benzoylformate-based photopolymerization initiator, is preferable because hydrogen is less likely to be extracted from the molecular chain of the polymerizable compound during polymerization.

Examples of commercially available products of the intramolecular hydrogen abstraction type photopolymerization initiator include Omnirad MBF and Omnirad 754 (both are manufactured by IGM Resins, "Omnirad" is a registered trademark of the company).

The intermolecular hydrogen abstraction type photopolymerization initiator is a photopolymerization initiator which is excited by irradiation with active energy rays such as ultraviolet rays and abstracts hydrogen from other molecules to generate radicals. Examples of the intermolecular hydrogen abstraction type photopolymerization initiator include benzophenone-based initiators including benzophenon, methyl o-benzoylbenzoate, 4-phenylbenzophenone, 4,4'-dichlorobenzophenone, hydroxybenzophenone, 4-benzoyl-4'-methyl-diphenyl sulfide, acrylated benzophenon, 3,3',4,4'-tetra(t-butylperoxycarbonyl) benzophenon, 3,3'-dimethyl-4-methoxybenzophenone and the like, and thioxanthone-based initiators such as 2-isopropylthioxanthone, 2,4-dimethylthioxanthone, 2,4-diethylthioxanthone, 2,4-dichlorothioxanthone and the like.

Examples of commercially available products of the intermolecular hydrogen abstraction type photopolymerization initiator include Omnirad 500 (manufactured by IGM Resins), Speedcure ITX (manufactured by Sartomer, "Speedcure" is a registered trademark of Arkema France) and the like.

Examples of the intramolecular cleavage type photopolymerization initiator include the following: acetophenone-based initiators such as 2-hydroxy-2-methyl-1-phenylpropan-1-one, benzyl dimethyl ketal, 4-(2-hydroxyethoxy) phenyl-(2-hydroxy-2-propyl) ketone, 1-hydroxycyclohexyl-phenyl ketone, 2-methyl-2-morpholino (4-methylthiophenyl) propan-1-one, and 2-benzyl-2-dimethylamino-1-(4-morpholinophenyl)-butanone; benzoin-based initiators such as benzoin, benzoin methyl ether, and benzoin isopropyl ether; acylphosphine oxide-based initiators such as 2,4,6-trimethylbenzoin diphenylphosphine oxides, bis (2,4,6-trimethylbenzoin) phenylphosphine oxides; and the like.

Examples of commercially available products of the intramolecular cleavage type photopolymerization initiator include Omnirad 127, Omnirad 184, Omnirad 651, Omnirad 2959, Omnirad 819, and Esacure One.

The content of the photopolymerization initiator is preferably 3% by mass or more and 20% by mass or less based on the total mass of the polymerizable compound. The content of the photopolymerization initiator is more preferably 3% by mass or more and 15% by mass or less, still more preferably 3% by mass or more and 10% by mass or less, particularly preferably 5% by mass or more and 10% by mass or less, based on the total mass of the polymerizable compounds. When the content is 3% by mass or more, the curability and adhesion of the polymerizable ink can be further enhanced.

### 1-4. Other Components

The ink may further contain other components, such as an organic pigment, a dye, a surfactant, a fluorescent brightener, a gelling agent, and a polymerization inhibitor.

Examples of the organic pigments include red pigments, yellow pigments, blue pigments, and white pigments, which are used in inks for image formation. As these pigments, known pigments can be used. Examples of the dye include a red dye, a yellow dye, and a blue dye, which are used in an ink for image formation. As these dyes, known dyes can be used.

Examples of the surfactant include anionic surfactants such as dialkylsulfosuccinates, alkylnaphthalenesulfonates, and fatty acid salts. Examples of the surfactant further include nonionic surfactants such as polyoxyethylene alkyl ethers, polyoxyethylene alkyl allyl ethers, acetylene glycols and polyoxyethylene-polyoxypropylene block copolymers. Examples of the surfactant further include cationic surfactants such as alkylamine salts and quaternary ammonium salts, and silicone-based and fluorine-based surfactants.

The content of the surfactant is not particularly limited, but can be, for example, 0.001% by mass or more and less than 1.0% by mass based on the total mass of the ink.

The gelling agent is a compound that turns an ink into a gel state at room temperature (25°C) and into a sol state when heated (for example, 80°C). For example, the gelling agent is preferably a compound that dissolves in liquid components (such as a polymerizable compound and an organic solvent) contained in the ink at a temperature higher than the gelation temperature of the ink and crystallizes at a temperature equal to or lower than the gelation temperature of the ink. The gelation temperature means a temperature at which, when an ink solated or liquefied by heating is cooled, the ink undergoes a phase transition from sol to gel and the viscosity of the ink suddenly changes. Specifically, when the solated or liquefied ink is cooled while the viscosity thereof is measured by a rheometer (for example, MCR300 manufactured by Anton Paar), the temperature at which the viscosity rapidly increases can be defined as the gelation temperature of the ink.

Examples of the gelling agent include ketone wax, ester wax, petroleum wax, vegetable wax, animal wax, mineral wax, hardened castor oil, modified wax, higher fatty acid, higher alcohol, hydroxystearic acid, fatty acid amides including N-substituted fatty acid amide and special fatty acid amide, higher amine, sucrose fatty acid ester, synthetic wax, dibenzylidene sorbitol, dimer acid and dimer diol.

The content of the gelling agent is preferably 1.0% by mass or more and 10.0% by mass or less, more preferably 2.0% by mass or more and 7.5% by mass or less, and still more preferably 2.0% by mass or more and 3.5% by mass or less, based on the total mass of the ink.

Examples of the polymerization inhibitor include N-oxyl-based polymerization inhibitors, phenol-based polymerization inhibitors, quinone-based polymerization inhibitors, amine-based polymerization inhibitors, and copper dithiocarbamate-based polymerization inhibitors. Only one type of the polymerization inhibitor may be contained in the ink, or two or more types thereof may be contained in combination.

Examples of the N-oxyl-based polymerization inhibitor include 4-hydroxy-2,2,6,6-tetramethylpiperidine-N-oxyl (TEMPO), 4-hydroxy-2,2,6,6-tetramethyl-piperidine-N-oxyl, 4-oxo-2, 2,6,6-tetramethyl-piperidine-N-oxyl, 4-methoxy-2, 2,6,6-tetramethyl-piperidine-N-oxyl, 4-acetoxy-2, 2,6,6-tetramethyl-piperidine-N-oxyl, and the like. Examples of commercially available products of the N-oxyl-based polymerization inhibitor include Irgastab UV10 (manufactured by Basf SE ("Irgastab" is a registered trade mark of the company)).

Examples of the phenol-based polymerization inhibitor include 2,6-di-tert-butylphenol, 2,4-di-tert-butylphenol, 2-tert-butyl 4,6-dimethylphenol, 2,6-di-tert-butyl-4-methylphenol, 2,4,6-tri-tert-butylphenol, 2,6-di-t-butyl-p-cresol (butylated hydroxy toluene: BHT), 4-methoxyphenol, and 2-methoxy-4-methylphenol.

Examples of the quinone-based polymerization inhibitor include hydrochinone, methoxyhydroquinone, benzoquinone, 1,4-naphthoquinone, p-tert-butylcatechol and the like.

Examples of the amine-based polymerization inhibitor include alkylated diphenylamine, N,N'-diphenyl-p-phenylenediamine, and phenothiazine.

Examples of the copper dithiocarbamate-based polymerization inhibitor include copper dimethyldithiocarbamate, copper diethyldithiocarbamate, copper dibutyldithiocarbamate and the like.

The content of the polymerization inhibitor is not particularly limited, but can be, for example, 0.01% by mass or more and 0.5% by mass or less based on the total mass of the ink.

### 1-5. Physical Properties of Ink

The ink is preferably capable of forming a cured film having a volume resistivity of 10¹¹ Ω· m or more. The specific surface resistance of the cured film can be measured using Hiresta UX (manufactured by Nitto Seiko Analytech Co., Ltd., MCP HT800).

### 1-6. Method for Preparing Ink

The ink can be prepared by mixing the above-described components. At this time, the phosphorescent pigment, the acidic dispersant, and a small amount of polymerizable compound may be kneaded to prepare a pigment dispersion first, and the remaining polymerizable compound and the like may be added later to the obtained pigment dispersion. At this time, in order to increase the solubility of the dispersant and the like, it is preferable to mix the phosphorescent pigment, the acidic dispersant, and the like while heating the components, thereby preparing the dispersion liquid.

For preparation of the pigment dispersion, a homogenizer, a stirring grinding mixer, a wet atomizer, a bead mill, or the like can be used.

Among these, a stirring grinding mixer is preferable. The stirring grinding mixer can disperse the phosphorescent pigment while reducing its particle diameter. Thus, the stirring grinding mixer can reduce the proportion of coarse particles in the pigment dispersion and the ink and cause the phosphorescent pigment to satisfactorily be adsorb the acidic dispersant, thereby significantly increasing the luminance of the cured product and the ejectability of the ink. Furthermore, unlike a bead mill or the like, a stirring grinding mixer is less likely to cause damage to an apparatus due to a phosphorescent pigment even when dispersing a hard phosphorescent pigment. In addition, unlike a jet mill or the like, the stirring grinding mixer can perform dispersion treatment of the phosphorescent pigment together with the polymerizable compound.

Note that the preparation of the pigment dispersion with the stirring grinding mixer may be performed by one stage treatment or may be performed in a plurality of stages. When the dispersion treatment is performed in a plurality of stages, a first stage of dispersion treatment can be performed on the phosphorescent pigment, the acidic dispersant, and a small amount of the polymerizable compound, and then the polymerizable compound is added to perform a second stage of dispersion treatment. Alternatively, in order to facilitate dispersion of the phosphorescent pigment, only the phosphorescent pigment may be subjected to the dispersion treatment (dry pulverization) in the first stage, and then the acidic dispersant and the polymerizable compound may be added, followed by one or more times of the dispersion treatment in the second stage.

Preparation of the ink by mixing with other components can be carried out using a homogenizer, a ceramic stirring grinding mixer, a wet atomizer, or the like.

### 2. Method for Forming Cured Product

The ink described above can be used for forming a cured product by being applied to a base material by an inkjet method and cured.

The application of the ink to the base material may be performed by discharging the ink from an inkjet head and landing the ink on the base material.

The method of ejection from the inkjet head may be either an on-demand system or a continuous system. The inkjet head of the on-demand system may be of an electromechanical conversion system, such as a single cavity type, a double cavity type, a bender type, a piston type, a share mode type, and a shared wall type. The inkjet head of the on-demand system may be any of electrothermal conversion systems such as a thermal inkjet type and a bubble jet ("bubble jet" is a registered trademark of Canon Inc) type.

These inkjet heads or an image forming apparatus including the inkjet heads may have a configuration in which the ink is circulated inside or outside the inkjet heads.

In addition, the printer for forming the cured product may have a mechanism for stirring the ink for redispersing the phosphorescent pigment inside the inkjet head or in the flow path between the main tank and the inkjet head.

The type of the base material is not particularly limited, and examples thereof include paper, resin films, ABS resin plates, acrylic resin plates, aluminum plates, glass plates, polycarbonate plates, and fabric. The shape of the base material is not particularly limited, and may be various three dimensional shapes in addition to a plate shape, a film shape, and a sheet shape. In addition, the composition may be applied to the space formed inside the base material by various methods.

The ink can be cured by polymerizing and crosslinking the polymerizable compound by irradiation with active energy rays. Examples of the active energy rays include, electron beams, ultraviolet rays, α-rays, γ-rays, and X-rays. Among these, ultraviolet rays and electron beams are preferable. The ultraviolet rays are preferably light having peak wavelengths in a range of 360 nm to 410 nm inclusive. Furthermore, the ultraviolet rays are preferably emitted from an LED light source. Since an LED emits less radiant heat than a conventional light source (e.g., a metal halide lamp) when an LED is used, an ink is less likely to be melted during the irradiation with the active energy rays, and gloss unevenness and the like are less likely to occur.

When ultraviolet rays are used as the active energy rays, the amount of light per irradiation is preferably 500 mJ/cm² or more and 4000 mJ/cm² or less. When the amount is 500 mJ/cm² or more, the curability of the polymerizable compound can be improved. When the amount is 4000 mJ/cm² or less, discoloration of the cured product can be suppressed.

For forming a cured product having a large thickness, application and curing of the ink may be repeatedly performed.

After the cured product is produced in this manner, a protective film may be formed to cover the cured product with a varnish, a laminate film, an ink, or the like, or the cured product may be post-processed into a desired shape.

The cured product thus formed preferably has a thickness of 0.3 mm or more and 1.5 mm or less. By increasing the thickness of the cured product, the luminance of the cured product can be increased. In the present embodiment, since the acidic dispersant is used, the luminance is less likely to be saturated even when the thickness is increased, and the luminance can be further increased by forming a cured product having a larger thickness.

### Examples

Hereinafter, the present invention will be specifically described with reference to Examples, but the scope of the present invention is not limited to the description of Examples.

### 1. Preparation of Material

An inkjet ink was prepared using the following materials.

### 1-1. Polymerizable Compound

Monomer 1: dipropylene glycol diacrylate
Monomer 2: phenol 4EO modified acrylate

### 1-2. Photopolymerization Initiator

Initiator 1: Omnirad MBF, manufactured by IGM RESINS BV
Initiator 2: Omnirad 819 (intramolecular cleavage type), manufactured by IGM RESINS BV

### 1-3. Phosphorescent Pigment

Phosphorescent pigment 1: Luminova G-L 300FF, manufactured by Nemoto & Co., Ltd ("Luminova" is a registered trade mark of the company)
Phosphorescent pigment 2: Luminova BGL-300FF, manufactured by Nemoto & Co., Ltd
Phosphorescent pigment 3: Luminova G 300F, manufactured by Nemoto & Co., Ltd

### 1-4. Dispersant

Dispersant 1: Marialim SC0505K ("Marialim" is a registered trade mark of the company), manufactured by NOF Corp.
Dispersant 2: Efka FA4620, manufactured by Basf SE ("Efka" is a trademark of the company)
Dispersant 3: Solsperse S41000, manufactured by Lubrizol ("Solsperse" is a registered trade mark of the company)
Dispersant 4: Solsperse S79000, manufactured by Lubrizol Co., Ltd
Dispersant 5: Marialim SC1015F manufactured by NOF Corp.
Dispersant 6: Marialim AKM-0531 manufactured by NOF Corp.
Dispersant 7: Efka PX4701, manufactured by Basf SE
Dispersant 8: Efka PX4703, manufactured by Basf SE

### 1-5. Other Components

Polymerization inhibitor: Irgastab UV-10 ("Irgastab" is a registered trade mark of the company) manufactured by Basf SE.

### 2. Preparation of Ink

2-1. Preparation of Ink 1 to Ink 12, Ink 18, and Ink 19

### 2-1-1. Preparation of Pigment Dispersion Liquid

In a polypropylene vessel, 50 parts by mass of the phosphorescent pigment 1, 2.5 parts by mass of the dispersant 1, and 47.5 parts by mass of the monomer 1 were placed together with 50 parts by mass of zirconia beads having a mean particle diameter of 0.3 mm. Next, a dispersion treatment was performed for 30 minutes using a paint shaker, and the zirconia beads were removed, thereby preparing a pigment dispersion liquid.

### 2-1-2. Preparation of Ink

Monomer 1 (50.9 parts by mass), initiator 1 (9 parts by mass), and a polymerization inhibitor (0.1 parts by mass) were sufficiently mixed by a triple roll. To the resulting mixture, 40 parts by mass of the pigment dispersion liquid was added, and the mixture was further mixed with a triple roll mill. Thereafter, the mixture was filtered through a 30-µm polypropylene pleated filter (manufactured by ROKI TECHNO CO., LTD) to obtain ink 1.

Ink 2 to Ink 12, Ink 18, and Ink 19 were obtained in the same manner except that the type and amount (ratio) of each component were changed so that the composition of the ink became as illustrated in Table 1 and Table 2.

### 2-2. Preparation of Ink 13 to Ink 16

### 2-2-1. Preparation of Pigment Dispersion Liquid

Fifty parts by mass of the phosphorescent pigment 1, 2.5 parts by mass of the dispersant, and 11.5 parts by mass of the monomer 1 were placed in a tabletop stirring grinding mixer (manufactured by Ishikawa Factory Co., Ltd., D18S) and ground for 30 minutes. Thereafter, 36 parts by mass of the monomer 1 was added, and the mixture was subjected to grinding treatment for 5 minutes to prepare a pigment dispersion liquid.

### 2-2-2. Preparation of Ink

Ink 13 to Ink 16 were obtained in the same manner as in the preparation of Ink 1 except that the obtained pigment dispersion liquid described above was used.

### 2-3. Preparation of Ink 17

### 2-3-1. Preparation of Pigment Dispersion Liquid

Fifty parts by mass of the phosphorescent pigment 1 was placed in a table-top stirring grinding mixer (manufactured by Ishikawa Plant Co., Ltd., D18S) and ground for 30 minutes. Thereafter, 2.5 parts by mass of the dispersant and 11.5 parts by mass of the monomer 1 were added, and the mixture was further subjected to grinding treatment for 30 minutes. After adding 36 parts by mass of the monomer 1, the mixture was ground for 5 minutes to prepare a pigment dispersion liquid.

### 2-3-2. Preparation of Ink

Ink 17 was obtained in the same manner as in the preparation of Ink 1 except that the obtained pigment dispersion liquid described above was used.

The compositions of Ink 1 to Ink 19 and the methods for producing the pigment dispersions thereof are listed in Table 1 to Table 3. Note that the unit of the composition is% by mass, and the unit of the acid value and the amine value is mgKOH/g. Furthermore, the types of functional groups (P: phosphate group, C: carboxyl group, and B: basic group) that the dispersant has, and the acid value and the amine value are catalog values.

**[Table 1]**

| Ink No | | 1 | 2 | 3 | 4 | 5 | 6 | 7 | 8 | 9 |
|---|---|---|---|---|---|---|---|---|---|---|
| | Monomer 1 | 69.9 | 69.9 | 69.9 | 29.9 | 49.9 | 44.9 | 69.9 | 69.9 | 29.9 |
| | Monomer 2 | | | | 40.0 | | | | | 40.0 |
| | Initiator 1 | 9.0 | 9.0 | 9.0 | 8.0 | 9.0 | 9.0 | 9.0 | 9.0 | 8.0 |
| | Initiator 2 | | | | 1.0 | | | | | 1.0 |
| | Pigment 1 | 20.0 | | | 20.0 | 40.0 | 45.0 | 20.0 | 20.0 | 20.0 |
| | Pigment 2 | | 20.0 | | | | | | | |
| | Pigment 3 | | | 20.0 | | | | | | |
| | Dispersant 1 | 1.0 | 1.0 | 1.0 | 1.0 | 1.0 | 1.0 | | | |
| Composition | Dispersant 2 | | | | | | | 1.0 | | |
| | Dispersant 3 | | | | | | | | 1.0 | 1.0 |
| | Dispersant 4 | | | | | | | | | |
| | Dispersant 5 | | | | | | | | | |
| | Dispersant 6 | | | | | | | | | |
| | Dispersant 7 | | | | | | | | | |
| | Dispersant 8 | | | | | | | | | |
| | Polymerization inhibitor | 0.1 | 0.1 | 0.1 | 0.1 | 0.1 | 0.1 | 0.1 | 0.1 | 0.1 |
| | Total | 100. 0 | 100. 0 | 100. 0 | 100. 0 | 100. 0 | 100. 0 | 100. 0 | 100. 0 | 100. 0 |
| Dispersant | Acid value | 130 | 130 | 130 | 130 | 130 | 130 | 290 | 50 | 50 |
| | Adsorbing group | C | C | C | C | C | C | P | P | P |
| Method for producing pigment dispersion | | Paint shaker | | | | | | | | |

**[Table 2]**

| Ink No | | 10 | 11 | 12 | 13 | 14 | 15 | 16 | 17 |
|---|---|---|---|---|---|---|---|---|---|
| | Monomer 1 | 69.9 | 69.9 | 69.9 | 69.9 | 29.9 | 69.9 | 69.9 | 69.9 |
| | Monomer 2 | | | | | 40.0 | | | |
| | Initiator 1 | 9.0 | 9.0 | 9.0 | 9.0 | 8.0 | 9.0 | 9.0 | 9.0 |
| | Initiator 2 | | | | | 1.0 | | | |
| | Pigment 1 | 20.0 | 20.0 | 20.0 | 20.0 | 20.0 | 20.0 | 20.0 | 20.0 |
| | Pigment 2 | | | | | | | | |
| | Pigment 3 | | | | | | | | |
| | Dispersant 1 | | | | 1.0 | 1.0 | | | 1.0 |
| Composition | Dispersant 2 | | | | | | | | |
| | Dispersant 3 | | | | | | | 1.0 | |
| | Dispersant 4 | 1.0 | | | | | | | |
| | Dispersant 5 | | 1.0 | | | | 1.0 | | |
| | Dispersant 6 | | | 1.0 | | | | | |
| | Dispersant 7 | | | | | | | | |
| | Dispersant 8 | | | | | | | | |
| | Polymerization inhibitor | 0.1 | 0.1 | 0.1 | 0.1 | 0.1 | 0.1 | 0.1 | 0.1 |
| | Total | 100. 0 | 100. 0 | 100. 0 | 100. 0 | 100. 0 | 100. 0 | 100. 0 | 100.0 |
| Dispersant | Acid value | 150 | 130 | 130 | 130 | 130 | 130 | 50 | 130 |
| | Adsorbing group | P | C | C | C | C | C | P | C |
| Method for producing pigment dispersion | | Paint shaker | | | Stirring grinding mixer | | | | Stirring grinding mixer |

**[Table 3]**

| Ink No | | 18 | 19 |
|---|---|---|---|
| | Monomer 1 | 69.9 | 69.9 |
| | Monomer 2 | | |
| | Initiator 1 | 9.0 | 9.0 |
| | Initiator 2 | | |
| | Pigment 1 | 20.0 | 20.0 |
| | Pigment 2 | | |
| | Pigment 3 | | |
| | Dispersant 1 | 1.0 | 1.0 |
| Composition | Dispersant 2 | | |
| | Dispersant 3 | | |
| | Dispersant 4 | | |
| | Dispersant 5 | | |
| | Dispersant 6 | | |
| | Dispersant 7 | 1.0 | |
| | Dispersant 8 | | 1.0 |
| | Polymerization inhibitor | 0.1 | 0.1 |
| | Total | 100.0 | 100.0 |
| Dispersant | Amine value | 40 | 56 |
| | Adsorbing group | B | B |
| Method for producing pigment dispersion | | Paint shaker | |

### 4. Evaluation

### 4-1. Luminance

A circulation-type inkjet head (KM1024aLHG-RC, manufactured by Konica Minolta, Inc.) and head modules each having a resolving power of 720dpi were produced. Each head module was filled with a corresponding ink.

Next, a voltage was applied to the inkjet head so as to attain a droplet ejection amount of 140 pL (ejection amount of 20 pL per ejection, the ejection was performed seven times). Thus, the ink was ejected such that a 150 mm × 150 mm solid pattern was printed, thereby applying the ink to an acryl resin plate having a thickness of 2 mm as a base material. Then, using a UVLED curing lamp (manufactured by Phoseon, FireJet FJ100), the ink was irradiated with ultraviolet rays having a wave length of 365 nm, an illuminance of 2 W/cm², and a light amount of 2000 mJ/cm². Thus, the ink applied to the base material was cured.

Another ink was applied onto the cured ink under the same conditions, and was cured by irradiation with ultraviolet rays under the same conditions. This operation was repeated to form a cured product having a thickness of 1000 µm.

The luminance of each cured product was measured by phosphorescence luminance measurement in accordance with JIS Z9107A 2008. To be specific, the base material (phosphorescent molded article) having each cured product was stored in a dark room for 48 hours or more, and then the cured product was irradiated with light using a commercial light-source fluorescent lamp D65 at an illuminance of 4500 1x for 15 minutes. The afterglow luminance of the cured product 2 seconds after stopping the light irradiation was measured using a luminance meter (LS150, manufactured by Konica Minolta, Inc.). Based on the measured luminance, the luminance of the cured product obtained from each ink was evaluated according to the following criteria.
A: Luminance was greater than or equal to 15 cd/m²
B: Luminance was greater than or equal to 10 cd/m² and less than 15 cd/m²
C: Luminance was greater than or equal to 5 cd/m² and less than 10 cd/m²
D: Luminance was less than 5 cd/m²

### 4-2. Ejectability

A nozzle check pattern was printed under the same conditions as in the evaluation of the luminance, the head defect was confirmed, and the ejectability was evaluated. The ejectability of each ink was evaluated according to the following criteria based on the ratio of the number of nozzles in which the nozzle defect occurred to the total number of nozzles.
A: Nozzle defect was 0% or more and less than 1%
B: Nozzle defect was 1% or more and less than 5%
C: Nozzle defect was 5% or more and less than 10%
D: Nozzle defect was 10% or more

### 4-3. Particle Diameter of Pigment

The volume average particle diameters D50 and D90 of the phosphorescent pigment in the ink were measured by a dynamic light scattering method using a particle diameter measuring device (LUMiSizer, manufactured by LUM Japan Co., Ltd) and data analysis software installed in the particle diameter measuring device.

### The evaluation results are shown in Tables 4 to 6. Note that the units of D50 and D90 are µm.

**[Table 4]**

| Ink No | 1 | 2 | 3 | 4 | 5 | 6 | 7 | 8 | 9 |
|---|---|---|---|---|---|---|---|---|---|
| Luminance | B | C | B | A | B | A | C | C | B |
| Ejectability | C | C | D | C | C | D | D | C | C |
| D50 | 2.1 | 2.0 | 5.6 | 2.1 | 2.1 | 2.1 | 1.7 | 2.0 | 2.0 |
| D90 | 3.5 | 3.3 | 7.0 | 3.5 | 3.5 | 3.5 | 2.8 | 3.3 | 3.3 |

**[Table 5]**

| Ink No | 10 | 11 | 12 | 13 | 14 | 15 | 16 | 17 |
|---|---|---|---|---|---|---|---|---|
| Luminance | C | B | B | A | A | A | B | A |
| Ejectability | C | C | C | B | B | B | B | A |
| D50 | 1.8 | 2.1 | 2.1 | 2.3 | 2.3 | 2.3 | 2.1 | 2.1 |
| D90 | 3.0 | 3.5 | 3.5 | 3.8 | 3.8 | 3.8 | 3.5 | 3.5 |

**[Table 6]**

| Ink No | 18 | 19 |
|---|---|---|
| Luminance | D | D |
| Ejectability | D | D |
| D50 | 2.3 | 2.3 |
| D90 | 3.8 | 3.8 |

As illustrated in Tables 1 to 6, by dispersing the phosphorescent pigment with the acidic dispersant, the ejectability of the ink containing the polymerizable compound and the luminance of the cured product formed therefrom could be enhanced.

### Industrial Applicability

According to the present invention, an inkjet ink containing a phosphorescent pigment can be more easily used. Therefore, the present invention is expected to further broaden the applications to which an inkjet ink containing a phosphorescent pigment can be applied, and contribute to further development in this field.

Although embodiments of the present invention have been described and illustrated in detail, it is clearly understood that the same is by way of illustration and example only and not limitation, the scope of the present invention should be interpreted by terms of the appended claims.

## Claims

1. An inkjet ink, comprising:
a polymerizable compound, a phosphorescent pigment, and a dispersant having an acidic functional group, wherein
the inkjet ink is cured by irradiation with an active ray.

2. The inkjet ink according to claim 1, wherein
the phosphorescent pigment is a phosphor containing an aluminate.

3. The inkjet ink according to claim 1 or 2, wherein
the phosphorescent pigment is a phosphor containing at least one aluminate selected from the group consisting of calcium aluminate, strontium aluminate, and barium aluminate.

4. The inkjet ink according to any one of claims 1 to 3, wherein
the phosphorescent pigment is SrAl₂O₄ containing europium (Eu) and dysprosium (Dy) as activators, or a Sr₄Al₁₄O₂₅ containing europium (Eu) and dysprosium (Dy) as the activators.

5. The inkjet ink according to any one of claims 1 to 4, wherein
a content of the phosphorescent pigment is 5% by mass or more and 40% by mass or less.

6. The inkjet ink according to any one of claims 1 to 5, wherein
the phosphorescent pigment is a particle having a median diameter of 2.0 µm or more and 5.0 µm or less.

7. The inkjet ink according to any one of claims 1 to 6, wherein
the dispersant has an acid value of 30 mgKOH/g or more and 200 mgKOH/g or less.

8. The inkjet ink according to any one of claims 1 to 7, wherein
the dispersant has a phosphate group or a carboxyl group.

9. The inkjet ink according to any one of claims 1 to 8, wherein
the dispersant has a carboxyl group.

10. A method for producing a pigment dispersion for an inkjet ink, the method comprising:
kneading a composition containing a polymerizable compound, a phosphorescent pigment, and a dispersant with a grinder.

11. The method according to claim 10, further comprising:
dry-pulverizing the phosphorescent pigment, wherein
in the kneading, the composition containing the polymerizable compound, the dry-pulverized phosphorescent pigment, and the dispersant is kneaded.

12. A method for producing an inkjet ink, the method comprising:
preparing the pigment dispersion produced by the method according to claim 10 or 11; and
mixing the prepared pigment dispersion and a polymerizable compound.

13. A method for forming a cured product, the method comprising:
ejecting the inkjet ink according to any one of claims 1 to 9 from an inkjet head to apply the inkjet ink to a base material; and
curing the inkjet ink applied to the base material by irradiation with an active ray.

14. A cured product formed by curing the inkjet ink according to any one of claims 1 to 9.

15. The cured product according to claim 14, wherein
the cured product has a thicknesses of 0.3 mm or more and 1.5 mm or less.
